# EUROPÄISCHE PATENTANMELDUNG

(11) **EP 1 278 025 A2**
(43) Veröffentlichungstag der Anmeldung: **22.01.2003**
(21) Anmeldenummer: 02004464.0
(22) Anmeldetag: 27.02.2002
(51) Int. Cl.: F24H 8/00, F24H 1/26

(54) **Wärmetauscher für ein Gasheizgerät, insbesondere ein Brennwertgerät**

(30) Priorität: 17.07.2001 DE 10134619
(71) Anmelder: ROBERT BOSCH GMBH, 70442 Stuttgart (DE)
(72) Erfinder: Kehl, Albin, Dr., 73098 Rechberghausen (DE); Schmuker, Franz, 73117 Wangen (DE); Schaefer, Albrecht, 70771 Leinfelden-Echterdingen (DE); Klosok, Jan, 71336 Waiblingen (DE)

(57) **Zusammenfassung**

Die Erfindung betrifft einen Wärmetauscher für ein Gasheizgerät, insbesondere für ein Brennwertgerät, mit einem hülsenförmigen Grundkörper, der mit einer Innenwand und einer Ummantelung einen Flüssigkeitskanal für die zu erwärmende Flüssigkeit bildet und sowohl mit den Abgasen als auch mit der Flüssigkeit in wärmeleitendem Kontakt steht. Ist nach der Erfindung vorgesehen, dass die Ummantelung als von der Innenwand getrenntes Teil ausgebildet ist und dass die Stirnseiten zwischen Innenwand und Ummantelung mittels Dichtungsringen flüssigkeitsdicht abgedichtet sind, dann kann der Wärmetauscher aus Innenwand und Ummantelung kostengünstig mit einfacher Sandgussform und abgelängter Ummantelung aus einem Rohr hergestellt werden.

## Beschreibung

Die Erfindung betrifft einen Wärmetauscher für ein Gasheizgerät, insbesondere für ein Brennwertgerät, mit einem hülsenförmigen Grundkörper, der mit einer Innenwand und einer Ummantelung einen Flüssigkeitskanal für die zu erwärmende Flüssigkeit bildet und sowohl mit den Abgasen als auch mit der Flüssigkeit in wärmeleitendem Kontakt steht.

### Stand der Technik

Ein Wärmetauscher dieser Art ist druch die EP 0 794 392 A1 bekannt. Dabei bilden die Innenwand und die Ummantelung mit den den dazwischen angeordneten Flüssigkeitskanal bildenden Teile einen einstückigen Grundkörper, der vorzugsweise im Aluminium-Sandgussverfahren hergestellt wird. Dieses Material wird aufgrund der guten Eigenschaften im Bezug auf Korrosion und Wärmeleitfähigkeit bevorzugt.

Derartige Wärmetauscher sind jedoch sehr teuer in der Herstellung, da in den Grundkörper sowohl Abgaskanäle als auch Flüssigkeitskanäle eingebracht werden müssen, die nicht miteinander in Verbindung stehen. Das Einbringen der Kanäle in den Grundkörper bedingt ein Einlegen von Kernen in die Sandgussform, die durch Kernlager gesichert werden müssen. Diese Sandgussform wird umso komplizierter desto mehr Kanäle zur Vergrößerung der Wärmeaustauschflächen in den Grundkörper einzubringen sind.

Es ist Aufgabe der Erfindung, einen Wärmetauscher der eingangs erwähnten Art zu schaffen, der mit großen Wärmeaustauschflächen mit einer einfachen Form kostengünstig hergestellt werden kann.

### Vorteile der Erfindung

Diese Aufgabe wird nach der Erfindung dadurch gelöst, dass die Ummantelung als von der Innenwand getrenntes Teil ausgebildet ist und dass die Stirnseiten zwischen Innenwand und Ummantelung mittels Dichtungsringen flüssigkeitsdicht abgedichtet sind.

Durch die Trennung des Grundkörpers in eine Innenwand und eine Ummantelung sind keine einstückig geschlossenen Kanäle an der Innenwand oder der Ummantelung erforderlich. Beide Teile können mit einfachen Formen hergestellt werden. Dies gilt insbesondere für die Innenwand, wenn sie auf der Innenwandung mit Rippen zur Vergrößerung der Wärmeaustauschfläche und auf de Außenwandung mit Stegen zur Bildung des Flüssigkeitskanals versehen ist und im Aluminium-Sandgussverfahren hergestellt wird. Die Ummantelung ist eine einfache Hülse, die aus Kunststoff oder Metall bestehen kann und aus einem handelsüblichen Rohr abgelängt werden kann. Der Flüssigkeitskanal für die zu erwärmende Flüssigkeit wird durch die Ummantelung vervollständigt und an beiden Stirnseiten des zusammengesetzten Grundkörpers mittels Dichtungsringen abgedichtet. Für die Ummantelung wird keine eigene Form benötigt. Das zusätzliche Teil für den Grundkörper trägt zu keiner ins Gewicht fallenden Kostenerhöhung für den zusammengesetzten Wärmetauscher bei, da die Innenwand wesentlich kostengünstiger herstellbar ist.

Der Strömungsweg für die zu erwärmende Flüssigkeit kann dadurch vergrößert werden, dass ein spiralförmiger Abstandssteg über dem unteren Anschlussstutzen beginnt und unter dem oberen Anschlussstutzen endet oder dass teilweise unterbrochene Ringstege etagenweise übereinander angeformt sind, wobei die Unterbrechungen der Ringstege in den Etagen vorzugsweise gegeneinander versetzt sind.

Die stirnseitige Abdichtung des zusammengesetzten Wärmetauschers kann nach einer Ausgestaltung so ausgeführt sein, dass die Innenwand im oberen und unteren Endbereich auf der Außenwandung eine mittels zweier umlaufender Stege gebildete Aufnahmenut für Dichtungsringe trägt.

Nach einer Ausgestaltung ist vorgesehen, dass die Rippen auf der Innenwandung der Innenwand quer zur Achsrichtung ausgerichtet und mindestens einmal in Achsrichtung unterbrochen sind, wobei zur Führung der Abgase zusätzlich vorgesehen sein kann, dass die Stege auf der Innenwandung im unteren Bereich der Innenwand eine Aufnahme für einen einsetzbaren Verdrängungskörper bilden, der zur Abgas-Eintrittsseite hin geschlossen ist und im Querschnitt zur Abgas-Austrittsseite hin kontinuierlich zunimmt.

Ist nach einer Weiterbildung vorgesehen, dass die untere Stirnseite der Innenwand und die Ummantelung mittels einer Abgas-Sammelwanne mit einem Anschlussstutzen für ein Abgas-Abführungssystem verschlossen ist, die gleichzeitig als Kondensat-Auffangwanne dient und mit einem Kondensat-Ablaufstutzen versehen ist, dann kann auf eine einfache Art gleichzeitig das Abgas einem Abgas-Abführungssystem zugeleitet und das anfallende Kondensat aufgefangen und abgeführt werden.

Um einen störungsfreien Betrieb zu gewährleisten und die Abgase und die Flüssigkeit eindeutig zu entkoppeln, wird die Abgas-Sammelwanne mittels eines Dichtungsringes gegen die Außenwandung des stirnseitigen Endes der Innenwand abgas- und flüssigkeitsdicht abgedichtet.

Der Einsatz eines Brenners in den Wärmetauscher und der Anbau eines Gebläses wird dadurch in einfacher Weise ermöglicht, dass die obere Stirnseite der Innenwand bis auf eine zentrische Aufnahme mittels einer Abschlusswand verschlossen ist, dass über diese Aufnahme ein Brenner in eine durch Stege begrenzte Brennkammer eingeführt ist, und dass auf der Abschlusswand ein Gebläse befestigbar ist, ohne dadurch die Strömung und den Wärmeaustausch der entstehenden Abgase zu beeinträchtigen. Dies gilt auch für die Weiterführung der Abgase, wenn zusätzlich vorgesehen ist, dass zwischen der Brennkammer und den Stegen gegeneinander gerichtete Axialstege einen zentrischen Abgasdurchlass bilden.

### Zeichnung

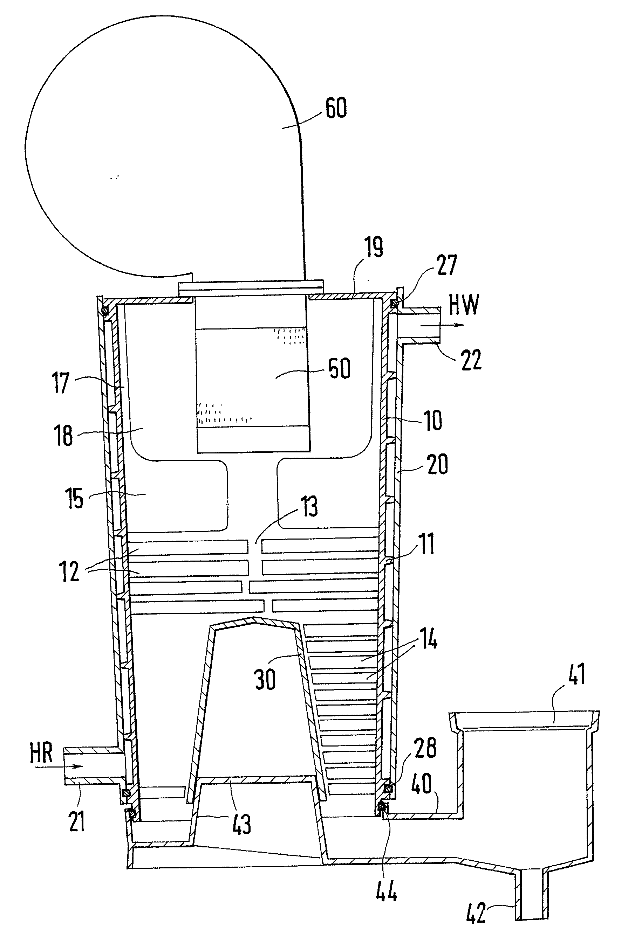

Die Erfindung wird anhand eines in der Zeichnung dargestellten Ausführungsbeispiels eines Gasheizgerätes mit einem Wärmetauscher nach der Erfindung näher erläutert.

### Ausführungsbeispiel

Das Grundelement des Gasheizgerätes stellt nach wie vor die im Aluminium-Sandgussverfahren hergestellte Innenwand 10 mit seinen hervorragenden Eigenschaften bezüglich Korrosionsbeständigkeit und Wärmeaufnahme und Wärmeleitfähigkeit dar.

Die Innenwand 10 ist im Wesentlichen hülsenförmig und unter Bildung eines Flüssigkeitskanals in eine ebenfalls hülsenförmige Kunststoff-Ummantelung 20 eingesetzt. Auf der Außenwandung trägt die Innenwand angeformte Abstandsstege 11 für die Kunststoff-Ummantelung 20, so dass zwischen dieser und der Außenwandung der Innenwand 10 ein Flüssigkeitskanal entsteht. Der Abstandssteg 11 kann spiralförmig ausgebildet sein, so dass von dem unten an der Kunststoff-Ummantelung 20 angeformten Anschlussstutzen 21 für den Flüssigkeits-Rücklauf HR ein spiralförmiger Flüssigkeitskanal zu dem oben an der Kunststoff-Ummantelung 20 angeformten Anschlussstutzen 22 für den Flüssigkeits-Vorlauf HV gebildet ist.

Die Abstandsstege 11 können aber auch als Ringstege mit mindestens einer Unterbrechung ausgebildet und etagenförmig übereinander angeordnet sein, wobei die Unterbrechungen der Ringstege vorzugsweise umfangsseitig gegeneinander versetzt sind, um den Strömungsweg für die Flüssigkeit zu vergrößern.

Bei der spiralförmigen Ausbildung des Abstandssteges 11 beginnt dieser unten über dem Anschlussstutzen 21 für den Flüssigkeits-Rücklauf HR und endet oben unter dem Anschlussstutzen 22 für den Flüssigkeits-Vorlauf HV.

An den beiden Stirnseiten sind auf der Außenwandung der Innenwand 10 mittels zweier Ringstege Aufnahmenuten für Dichtungsringe 27 und 28 gebildet.

Die Dichtungsringe 27 und 28 schließen den Flüssigkeitskanal zwischen der Außenwandung der Innenwand 10 und der Innenwandung der Kunststoff-Ummantelung 20 flüssigkeitsdicht ab.

Auf der Innenwandung der Innenwand 10 vergrößern angeformte Stege 12 und 14 sowie Rippen 15 die Wärmeaustauschfläche für die Abgase. Die Stege 12 und 14 und die Rippen 15 sind vorzugsweise quer zur Achsrichtung der Innenwand 10 gegeneinander gerichtet, damit nur eine Entformrichtung für den Sandkern, der für die Herstellung des Gusskörpers nötig ist, gegeben ist und mit Unterbrechungen 13 versehen. Im Bereich der Stege 14 wird dabei eine Aufnahme für einen einsetzbaren Verdrängungskörper 30 geschaffen, der die Abgase mehr und mehr radial in Richtung zur Innenwandung der Innenwand 10 lenkt. Der Verdrängungskörper 30 ist zur Abgas-Eintrittsseite hin geschlossen und sein Querschnitt nimmt zur offenen, der Abgas-Austrittsseite zugekehrten Unterseite hin kontinuierlich zu.

Eine Abgas-Sammelwanne 40 verschließt die Abgas-Austrittssseite des Wärmetauschers. Dabei hält eine kegelstumpfförmige Ausbuchtung 43 den Verdrängungskörper 30 in seiner eingesetzten Stellung in der Innenwand 10 fest. Die Abgas-Sammelwanne 40 ist mit einem Abgas-Anschlussstutzen 41 versehen, an dem ein Abgas-Abführungssystem angeschlossen werden kann. Die Abgas-Sammelwanne 40 dient gleichzeitig als Kondensat-Auffangwanne für das im Wärmetauscher anfallende Kondensat, das über einen Kondensat-Ablauf 42 der Ab-gas-Sammelwanne 40 abgeleitet werden kann.

Die Abgas-Sammelwanne 40 ist mittels eines Dichtungsringes 44 zur Außenwandung der Innenwand 10 hin abgas- und flüssigkeitsdicht abgedichtet.

Im oberen Bereich der Innenwand 10 bilden in einer Entformrichtung gegeneinander gerichtete Axialstege 17 eine Oberflächenvergrößerung der Brennkammer 18, in die ein Brenner 50 eingesetzt ist. Die obere Stirnseite der Innenwand 10 ist mittels einer Abschlusswand 19 bis auf eine zentrische Aufnahme verschlossen, durch die der Brenner 50 in die Brennkammer 18 eingeführt werden kann. Darüber hinaus kann an der Abschluss-wand 19 ein Gebläse 60 befestigt werden.

## Patentansprüche

1. Wärmetauscher für ein Gasheizgerät, insbesondere für ein Brennwertgerät, mit einem hülsenförmigen Grundkörper, der mit einer Innenwand und einer Ummantelung einen Flüssigkeitskanal für die zu erwärmende Flüssigkeit bildet und sowohl mit den Abgasen als auch mit der Flüssigkeit in wärmeleitendem Kontakt steht,
**dadurch gekennzeichnet,**
**dass** die Ummantelung (20) als von der Innenwand (10) getrenntes Teil ausgebildet ist und
**dass** die Stirnseiten zwischen Innenwand (10) und Ummantelung (20) mittels Dichtungsringen (27, 28) flüssigkeitsdicht abgedichtet sind.

2. Wärmetauscher nach Anspruch 1,
**dadurch gekennzeichnet,**
**dass** die Innenwand (10) auf der Innenwandung die Heizfläche vergrößernde Rippen (12, 14, 15) und auf der Außenwandung angeformte kanalbildende Abstandsstege (11) trägt.

3. Wärmetauscher nach Anspruch 1 oder 2,
**dadurch gekennzeichnet,**
**dass** die Abstandsstege (11) einen wendelförmigen Kanal bilden.

4. Wärmetauscher nach einem der Ansprüche 1 bis 3,
**dadurch gekennzeichnet,**
**dass** die Ummantelung (20) im unteren Bereich mit einem Anschlussstutzen (21) für den Rücklauf (HR) der zu erwärmenden Flüssigkeit und im oberen Bereich mit einem Anschlussstutzen (22) für den Flüssigkeits-Vorlauf (HV) versehen ist.

5. Wärmetauscher nach einem der Ansprüche 1 bis 4,
**dadurch gekennzeichnet,**
**dass** die Ummantelung (20) aus Metall oder Kunststoff besteht.

6. Wärmetauscher nach Anspruch 3,
**dadurch gekennzeichnet,**
**dass** ein spiralförmiger Abstandssteg (11) über dem unteren Anschlussstutzen (21) beginnt und unter dem oberen Anschlussstutzen (22) endet oder
**dass** teilweise unterbrochene Ringstege (11) etagenweise übereinander angeformt sind.

7. Wärmetauscher nach Anspruch 1,
**dadurch gekennzeichnet,**
**dass** die Innenwand (10) im oberen und unteren Endbereich auf der Außenwandung eine mittels zweier umlaufender Stege gebildete Aufnahmenut für Dichtungsringe (27, 28) trägt.

8. Wärmetauscher nach Anspruch 2,
**dadurch gekennzeichnet,**
**dass** die Rippen (12, 14, 15) der Innenwand (10) quer zur Achsrichtung ausgerichtet und mindestens einmal in Achsrichtung (13) unterbrochen sind.

9. Wärmetauscher nach Anspruch 2 oder 8,
**dadurch gekennzeichnet,**
**dass** die Rippen auf der Innenwandung der Innenwand (10) eine Aufnahme für einen einsetzbaren Verdrängungskörper (32) bilden, der zur Abgas-Eintrittsseite hin geschlossen ist und im Querschnitt zur Abgas-Austrittsseite hin kontinuierlich zunimmt.

10. Wärmetauscher nach einem der Ansprüche 1 bis 9,
**dadurch gekennzeichnet,**
**dass** die untere Stirnseite der Innenwand (10) und der Ummantelung (20) mittels einer Abgas-Sammelwanne (40) mit einem Anschlussstutzen (41) für ein Abgas-Abführungssystem verschlossen ist, die gleichzeitig als Kondensat-Auffangwanne dient und mit einem Kondensat-Ablaufstutzen (42) versehen ist.

11. Wärmetauscher nach Anspruch 10,
**dadurch gekennzeichnet,**
**dass** die Abgas-Sammelwanne (40) mittels eines Dichtungsringes (44) gegen die Außenwandung des stirnseitigen Endes der Innenwand (10) abgas- und flüssigkeitsdicht abgedichtet ist.

12. Wärmetauscher nach einem der Ansprüche 1 bis 11,
**dadurch gekennzeichnet,**
**dass** die obere Stirnseite der Innenwand (10) bis auf eine zentrische Aufnahme mittels einer Abschlusswand (19) verschlossen ist,
**dass** über diese Aufnahme ein Brenner (50) in eine durch Stege (17) begrenzte Brennkammer (18) eingeführt ist, und
**dass** auf der Abschlusswand (19) ein Gebläse (60) befestigbar ist.

13. Wärmetauscher nach einem der Ansprüche 2 bis 12,
**dadurch gekennzeichnet,**
**dass** die Rippen (12, 14) im unteren Bereich, in dem verstärkt Kondensat anfällt und in ungünstigen Fällen Korrosion auftritt, umlaufende Gassen bilden, die nach Entfernung der Abgas-Sammelschiene (40) für eine Reinigung zugänglich sind.
